# EUROPÄISCHE PATENTANMELDUNG

(11) **EP 0 922 948 A1**
(43) Veröffentlichungstag der Anmeldung: **16.06.1999**
(21) Anmeldenummer: 98122826.5
(22) Anmeldetag: 01.12.1998
(51) Int. Cl.: G01L 23/22, G01M 15/00, F02P 17/12, F02P 5/152

(54) **Verfahren zur Erkennung von klopfender Verbrennung aus einem Ionenstromsignal bei Brennkraftmaschinen**

(30) Priorität: 12.12.1997 DE 19755257
(71) Anmelder: TEMIC TELEFUNKEN microelectronic GmbH, 74072 Heilbronn (DE); DaimlerChrysler AG, 70567 Stuttgart (DE)
(72) Erfinder: Wilstermann, Hartung, 74405 Gaildorf (DE); Hohner, Peter, 70771 Echterdingen (DE); Bertelshofer, Peter, 90513 Zirndorf (DE); Schenk, Jürgen, 73095 Albershausen (DE)
(74) Vertreter: Kolb, Georg

(57) **Zusammenfassung**

Bisherige Verfahren waren sehr störanfällig, da sie das Ionenstromsignal gegenüber Schwankungen in der Zusammensetzung des Kraftstoffs, insbesondere gegenüber metallischen Bestandteilen, da es dadurch zu großen unterschieden im Verlauf des Ionenstromsignals und zu Fehlern bei der Erkennung von klopfender Verbrennung kommt.

Erfindungsgemäß wird ein Korrekturwert aus wenigstens einem der vorangegangenen Integralwerte des Ionenstromsignals abgeleitet. Dabei wird ausgenutzt, daß eine Veränderung des Kraftstoffes, bspw. eine Verunreinigung, sich im Vorratstank der Brennkraftmaschine erst mit dem anderen Kraftstoff vermischt und es somit zu einer langsamen und schrittweisen Veränderung des Ionenstromsignals kommt. Die Zeitkonstante einer Veränderung des Ionenstroms ist dabei um ein Vielfaches langsamer als die Einflüsse durch die klopfende Verbrennung und kann daher besonders vorteilhaft durch einen aus einer zeitlichen Gewichtung mehrerer vorangegangener Integralwerte bestimmten Korrekturfaktor berücksichtigt und ausgeglichen werden. Mittels des Korrekturfaktors kann bereits auch das Ionenstromsignal vor der Integration angepaßt werden.

## Beschreibung

Die Erfindung betrifft ein verfahren zur Erkennung von klopfender Verbrennung aus einem Ionenstromsignal bei Brennkraftmaschinen mit elektronischer Zündzeitpunktverstellung gemäß dem Oberbegriff des Patentanspruchs 1.

Die klopfende Verbrennung einer Brenkraftmaschine ist eine unkontrollierte Explosion des noch nicht verbrannten Gemischs im Zylinder und kann bei starken Kopfschlägen zur Schädigung des des Motors führen. Da jedoch gerade an der Klopfgrenze, also bei bereits leicht klopfender Verbrennung der Motor seine maximale Leistung freisetzt, ist es Ziel einer Motorsteuerung, diesen möglichst nahe an der Klopfgrenze zu betreiben. Tritt Klopfen auf, wird der Zündzeitpunkt langsam wieder in Richtung des oberen Totpunktes des Kolbens verschoben. Klopfende Verbrennung ist durch Schwingungen (5 bis 20 kHz) im Bereich nach dem Zylinderdruckmaximum charakterisiert und mittels des Ionenstroms ermittelbar. Das Ionenstromsignal weist jedoch bereits ein erstes Maximum sowie Schwingungen des Ionenstroms bei der sich ausbreitenden Flammfront auf. Dieses kann die Klopferkennung verfälschen, da diese Schwingungen auf Turbulenzen im Zylinder, nicht jedoch auf Klopfen zurückzuführen sind.

Verschiedene Vorrichtungen und Verfahren zur Erkennung klopfender Verbrennung sind bspw. der DE 42 39 592 C2, der DE 21 782 C2, der DE 34 15 948 C2, der DE 30 27 103 sowie der GB 2 259 365 zu entnehmen.

Klopferkennungsverfahren aus dem Ionenstromsignal gemäß dem Stand der Technik weisen den Nachteil auf, daß sie sehr störanfällig sind, da sie das Ionenstromsignal gegenüber Schwankungen in der Zusammensetzung des Kraftstoffs, insbesondere gegenüber metallischen Bestandteilen, da es dadurch zu großen Unterschieden im Verlauf des Ionenstromsignals und zu Fehlern bei der Erkennung von klopfender Verbrennung kommt. So führen bereits leichte Verunreinigungen mit Schwermetallen und anderen metallischen Bestandteilen, bspw. durch unsaubere Produktion des Kraftstoffs oder gar versehentliches Tanken von verbleitem Kraftstoff zu einer Vervielfachung des Ionenstromsignals, so daß auch eine einwandfreie Verbrennung als klopfend erkannt wird.

Aufgabe der Erfindung ist es daher, ein Verfahren zur Erkennung von klopfender Verbrennung aus dem Ionenstromsignal vorzustellen, welches Veränderungen der Kraftstoffzusammensetzung ausgleichen kann. Diese Aufgabe wird durch die kennzeichnenden Merkmale des Anspruchs 1 gelöst. Vorteilhafte Weiterbildungen der Erfindung beschreiben die unteransprüche.

So wird ein Korrekturwert aus wenigstens einem der vorangegangenen Integralwerte des Ionenstromsignals abgeleitet. Dabei wird ausgenutzt, daß eine Veränderung des Kraftstoffes, bspw. eine Verunreinigung, sich im Vorratstank der Brennkraftmaschine erst mit dem anderen Kraftstoff vermischt und es somit zu einer langsamen und schrittweisen Veränderung des Ionenstromsignals kommt. Die Zeitkonstante einer Veränderung des Ionenstroms ist dabei um ein Vielfaches langsamer als die Einflüsse durch die klopfende Verbrennung und kann daher durch einen aus wenigstens einem vorangegangenen Integralwert, besonders vorteilhaft jedoch durch einen aus einer zeitlichen Gewichtung mehrerer vorangegangener Integralwerte bestimmten Korrekturfaktor berücksichtigt und ausgeglichen werden.

Indem von dem wenigstens einen vorangegangenen Integralwert jeweils ein Integralmittelwert abgezogen wird, der ermittelt wird als Integration des vorangegangenen, nicht bandpaßgefilterten Ionenstromsignals über eine Zeitspanne, die größer ist als das Zeitfenster zur Klopferkennung, wird eine Abweichung des Integralwertes durch andere kurzfristige Veränderungen des Ionenstromsignals, bspw. durch Zündaussetzer oder Klopfen vor der Korrekturwertbestimmung minimiert. Der Korrekturwert erfaßt so einzig die längerfristige Verschiebung des Niveaus des Ionenstromsignals.

Mittels des Korrekturfaktors kann bereits auch das Ionenstromsignal vor der Integration angepaßt werden, wodurch vermieden wird, daß die numerische Integration des durch Kraftstoffeinflüsse erhöhten Ionenstromsignals zu einem Zahlenüberlauf und damit Fehlern in der Klopferkennung führt. Es wird somit das Ionenstromsignal noch vor der Integration auf Basis der vorangegangenen gewichteten Integralwerte bewertet und somit bereinigt integriert.

Indem die Korrektur jeweils nur zu einem bestimmten, vorgegebenen Betriebspunkt der Brennkraftmaschine durchgeführt wird, kann eine aufwendigere Abspeicherung eines Kennfeldes zur Berücksichtigung der Abhängigkeiten vom Betriebszustand verminden werden. Es wird dabei vorzugsweise ein typischerweise sehr häufig auftretender Betriebspunkt gewählt.

Durch den Vergleich des Korrekturwertes mit einem zulässigen Korrekturbereich wird außerdem verhindert, daß sich das korrigierte Ionenstromsignal zu weit vom realen entfernen kann, schnelle und starke Veränderungen zu stark berücksichtigt werden und ein Klopfen so möglicherweise nicht erkannt wird.

Die Erfindung wird nachfolgend anhand von Ausführungsbeispielen und Figuren näher erläutert.

Kurze Beschreibung der Figuren:
- Figur 1: unkorrigiertes, ungefiltertes Ionenstromsignal eines Verbrennungstaktes sowie Lage der Zeitfenster
- Figur 2: Blockschaltbild einer ersten Anordnung zur Durchführung des Verfahrens mit nachträglicher Korrektur des Integralwertes
- Figur 3: Blockschaltbild einer zweiten Anordnung zur Durchführung des Verfahrens mit einer eingangsseitigen Korrektur des Ionenstromsignals

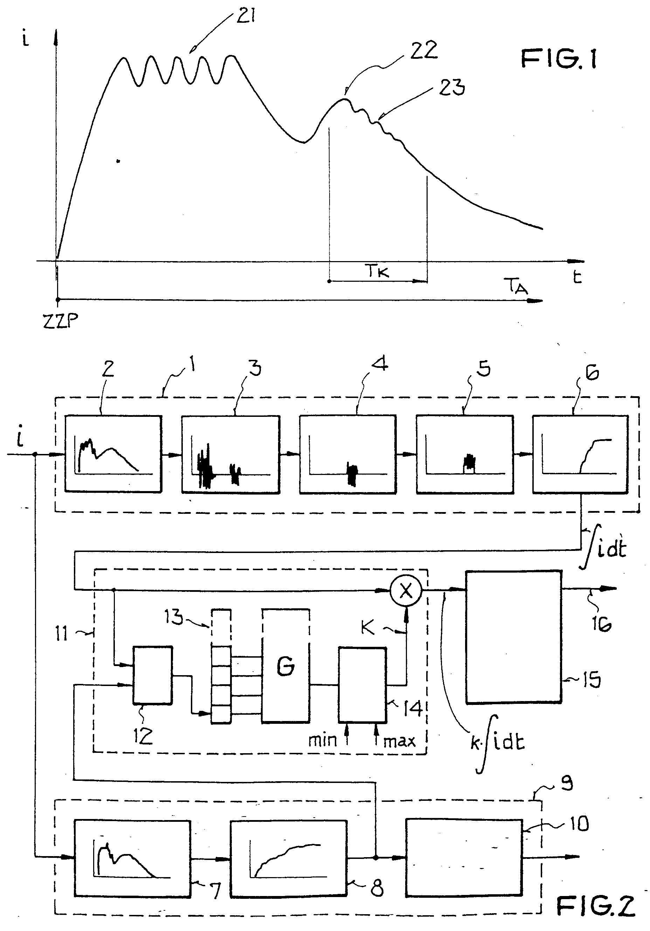

Die Figur 1 zeigt den zeitlichen Verlauf des Ionenstromsignals i während eines Verbrennungstaktes. Nach dem Zündzeitpunkt ZZP setzt ein starker, durch die sich ausbreitende Flammfront hervorgerufener Amplitudenanstieg (21) ein. Nach einem leichten Abfall erreicht das Ionenstromsignal ein erneutes Maximum (22) beim Druckmaximum der Verbrennung. Während bei einer klopffreien Verbrennung die Amplitude des Ionenstromsignals nachfolgend gleichmäßig absinkt, kommt es bei klopfender Verbrennung zu einer aufgelagerten Schwingung des Ionenstromsignals i, der charakteristischen Klopfschwingung 23. Diese wird zur Klopferkennung verwandt. Entsprechend ist das Zeitfenster zur Klopferkennung Tk auch auf diesen Bereich ausgerichtet. Eien Erfassung bspw.des anfänglichen Amplitudenanstiegs 21 würde zu einer fehlerhaften Klopferkennung führen. Eine Veränderung des Brennstoffs bspw. durch Verschmutzung mit Schwermetallbestandteilen, kann zu einer starken Abweichung des gesamten Ionenstromsignals führen. Die Signalamplitude kann sich dabei vervielfachen, ohne jedoch den typischen, in Fig. 1 gezeigten Verlauf gänzlich zu verlieren.

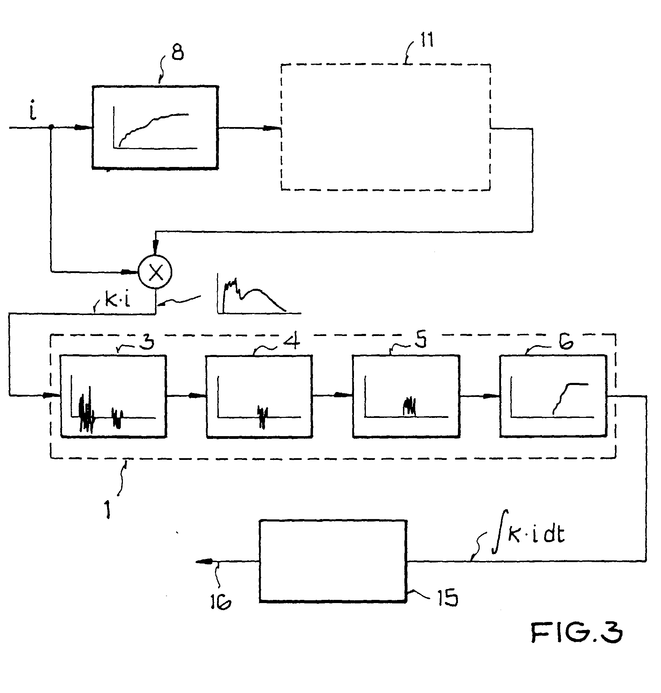

Dies kann erfindungsgemäß durch einen Korrekturwert ausgeglichen werden, der aus wenigstens einem dem aktuellen Integralwert vorangegangenen Integralwert abgeleitet wird. Dies soll anhand des Blockschaltbildes einer ersten Anordnung zur Durchführung des Verfahrens mit nachträglicher Korrektur des Integralwertes beschrieben werden. So wird das Ionenstromsignal i zunächst der Baugruppe 1 zur Klopfsignalvorverarbeitung zugeführt. Die Baugruppe 1 besteht im einzelnen aus einer Ionenstromsignalerfassung 2, einem Bandpaß 3 für den Frequenzbereich des Ionenstromsignals i, der für das Klopfen signifikant ist, der Zeitfensterschaltung 4 für das Zeitfenster TK, der Gleichrichtung 5 und der Integration 6, die in der angegebenen Reihenfolge miteinander verbunden sind. Am Ausgang kann dann nach jedem Verbrennungstakt der Integralwert ∫ i dt übernommen werden. Gleichzeitig wird der Ionenstrommittelwert erfaßt. Dazu kann als besonders bevorzugte Weiterbildung, wie in Fig. 2 dargestellt, eine Aussetzererkennungsbaugruppe 9 genutzt werden. Wie auch sonst für eine Ionenstrommittelwertbestimmung erforderlich, wird das Ionenstromsignal i über eine relativ zum Zeitfenster Tk große Zeitspanne, wie in fig. 1 mit TA angedeutet, erfaßt (7) und integriert (Integrationsbaustein 8). Der so erhalte Ionenstrommittelwert kann nachfolgend der Korrekturwertbestimmung 11 als auch der Zündasussetzererkennung 10 zugeführt werden. Die Korrekturwertbestimmung 11 bildet zunächst im Subtrahierglied 12 die Differenz aus dem bisher unkorrigierten Integralwert ∫ i dt des bandpaß- und zeitfenster-gefilterten Ionenstromsignals und dem Ionenstrommittelwert. Diese wird im Schieberegister 13 an Warte-stelle 13.0 gespeichert. Zuvor wurde der Speicherinhalt des Schieberegisters 13 jeweils um eine Position nach oben verschoben. Der aktuelle Wert wird somit in 13.0 eingetragen und für die aktuelle Korrekturwertbestimmung noch nicht berücksichtigt. Mit einer Gewichtsfunktion G werden die in den Stellen 13.1 ...13.n gespeicherten vorangegangenen Integralwerte (abzüglich des jeweiligen Integralmittelwertes) elementweise multipliziert, wobei die Summe der vergebenen Gewichte vorzugsweise auf einen Einheitswert (z.B.:1) normiert ist und entsprechend mit dem zeitlichen Abstand zum aktuellen Integralwert, also mit zunehmender Stelle im schieberegister, immer kleiner wird. Die Anzahl n der Registerstellen sowie die Verteilung der Gewichte ist dabei im Einzelfall unter Berücksichtigung von Nutzen und Rechenaufwand zu bestimmen. Der Korrekturwert wird dann als Qoutient aus einem Normwert für den Integralwert und der gewichteten vorangegangenen Integralwerte ermittelt. Dazu weist die Baugruppe der Gewichtsfunktion G entsprechende arithmetische Funktionen auf. Letztendlich wird der so ermittelte Korrekturwert noch im Vergleicher 14 mit einem Korrekturbereich verglichen, der durch die Korrekturgrenzwerte (min,max) begrenzt ist. überschreitet der ermittelte Korrekturwert den Korrekturbereich, so wird die Verbrennung automatisch als klopfend erkannt.

Nachfolgend wird der Integralwert ∫ i dt mit dem Korrekturwert K multipliziert und der so korrigierte Integralwert k*∫ i dt dem Klopfschwellenvergleich 15 zugeführt, die in Abhängigkeit vom Vergleich mit einer oder mehreren Klopfschwellen ein Klopferkennungssignal 16 setzt.

Figur 3 zeigt in Ergänzung zu Figur 2 noch ein Blockschaltbild einer zweiten Anordnung zur Durchführung des Verfahrens mit einer eingangsseitigen Korrektur des Ionenstromsignals i. Der Integrationsbaustein 8 bestimmt wieder über die Zeitspanne TA den Integralmittelwert und führt diesen der Korrekturwertbestimmung 11 zu. Diese bestimmt in Analogie zu figur 2 daraus den aktuellen Korrekturwert K. In diesem zweiten Ausführungsbeispiel wird jedoch der Korrekturwert K bereits eingansgseitig zum Ionenstromsignal i multipliziert. Der Baugruppe 1 zur Klopfsignalvorverarbeitung wird somit das bereits korrigierte Ionenstromsignal k*i zugeführt, dann bandpaßgefiltert (3), mit dem Zeitfenster TK gefenstert (4), gleichgerichtet (5) und integriert (6). Der so bereits korrigierte Integralwert ∫ k*i dt wird wiederum im Klopfschwellenvergleich 15 mit wenigstens einer Klopfschwelle verglichen und daraus das Klopferkennungssignal 16 abgeleitet.

## Patentansprüche

1. Verfahren zur Erkennung von klopfender Verbrennung bei Brennkraftmaschinen, bei dem bei jedem Verbrennungszyklus ein Ionenstrom im Brennraum erfaßt, das Ionenstromsignal über ein Zeitfenster erfaßt und bandpaßgefiltert und das bandpaßgefilterte Signal zu einem aktuellen Integralwert integriert wird, der aktuelle Integralwert mit einer vorgegebenen Klopfschwelle verglichen und bei einem aktuellen Integralwert, der größer als die Klopfschwelle ist, eine klopfende Verbrennung erkannt wird, **dadurch gekennzeichnet, daß** Veränderungen des Ionenstroms durch verschiedene Kraftstoffgemische durch einen Korrekturwert korrigiert werden, der aus wenigstens einem dem aktuellen Integralwert vorangegangenen Integralwert abgeleitet wird.

2. Verfahren nach Anspruch 1, **dadurch gekennzeichnet, daß** zur Ermittlung des Korrekturwerts von dem wenigstens einen vorangegangenen Integralwert ein Integralmittelwert abgezogen wird, der ermittelt wird als Integration des vorangegangenen, nicht bandpaßgefilterten Ionenstromsignals über eine Zeitspanne, die größer ist als das Zeitfenster zur Klopferkennung.

3. Verfahren nach Anspruch 1 oder 2, **dadurch gekennzeichnet, daß** der Korrekturwert für einen aktuellen Integralwert in Abhängigkeit von mehreren vorangegangenen Integralwerten bestimmt wird, die mit zunehmendem zeitlichen Abstand zum aktuellen Integralwert abfallend gewichtet werden.

4. Verfahren nach Anspruch 3, **dadurch gekennzeichnet, daß** der Korrekturwert ein Quotient aus einem festen Normwert und mehreren mit zunehmendem zeitlichen Abstand zum aktuellen Meßzeitpunkt abnehmend gewichteten und um den Integralmittelwert verkleinerten Integralwerten ist.

5. Verfahren nach einem der vorangehenden Ansprüche, **dadurch gekennzeichnet, daß** der aktuelle Integralwert mit dem Korrekturfaktor multipliziert und der korregierte Integralwert mit der Klopfschwelle verglichen wird.

6. Verfahren nach einem der vorangehenden Ansprüche 1 bis 3, **dadurch gekennzeichnet, daß** das Ionenstromsignal mit dem Korrekturfaktor multipliziert und ein korregiertes Ionenstromsignal der Bandpaßfilterung und nachfolgenden Integration zugeführt wird.

7. Verfahren nach einem der vorangehenden Ansprüche, **dadurch gekennzeichnet, daß** die Ermittlung eines neuen Korrekturwertes jeweils nur zu einem bestimmten vorgegebenen Betriebspunkt der Brennkraftmaschine vorgenommen wird.

8. Verfahren nach einem der vorangehenden Ansprüche, **dadurch gekennzeichnet, daß** der ermittelte Korrekturwert mit einem zulässigen Korrekturbereich verglichen wird und
a) falls der ermittelte Korrekturwert innerhalb des Korrekturbereichs liegt, die Korrektur mittels des Korrekturwertes durchgeführt wird,
b) falls der ermittelte Korrekturwert außerhalb des Korrekturbereichs liegt, das Ionenstromsignal als klopfende Verbrennung erkannt wird.

9. Verfahren nach Anspruch 2, **dadurch gekennzeichnet, daß** der Integralmittelwert ein für eine Zündaussetzererkennung ermittelter Aussetzerintegralwert eines Verbrennungstaktes ist.

10. Verfahren nach einem der vorangehenden Ansprüche, **dadurch gekennzeichnet, daß** mittels eines Korrekturwertunterdrückungsbefehls eine Berücksichtigung des Korrekturwertes abgeschaltet werden kann.
